# EUROPÄISCHE PATENTSCHRIFT

(11) **EP 3 915 514 B1**
(45) Veröffentlichungstag und Bekanntmachung des Hinweises auf die Patenterteilung: **07.09.2022**
(21) Anmeldenummer: 20176359.6
(22) Anmeldetag: 25.05.2020
(51) Int. Cl.: A61C 17/06, A61C 17/08, A61C 17/02

(54) **SAUG-HANDSTÜCK FÜR EINE DENTALE BEHANDLUNGSEINHEIT SOWIE SAUGVORRICHTUNG MIT EINEM SOLCHEN SAUG-HANDSTÜCK**
SUCTION HANDPIECE FOR DENTAL TREATMENT UNIT AND SUCTION DEVICE COMPRISING SUCH A SUCTION HANDPIECE
DISPOSITIF D'ASPIRATION À MANCHE POUR UNE UNITÉ DE TRAITEMENT DENTAIRE AINSI QUE DISPOSITIF D'ASPIRATION DOTÉ D'UN DISPOSITIF D'ASPIRATION À MANCHE

(43) Veröffentlichungstag der Anmeldung: 01.12.2021
(73) Patentinhaber: Dürr Dental SE, 74321 Bietigheim-Bissingen (DE)
(72) Erfinder: Dürrstein, Martin, 74321 Bietigheim-Bissingen (DE); Hägele, Andreas, 71384 Weinstadt (DE)
(74) Vertreter: Ostertag & Partner Patentanwälte mbB

(56) Entgegenhaltungen:
- AT-U1- 10 972
- DE-U1- 8 612 671
- DE-U1- 20 103 524

## Beschreibung

### 1. Gebiet der Erfindung

Die Erfindung betrifft ein Saug-Handstück für eine dentale Behandlungseinheit, das mit Kanülen sowie einer in der Behandlungseinheit angeordneten oder ihr zugeordneten Unterdruckquelle verbindbar ist.

### 2. Beschreibung des Standes der Technik

Bestimmte Tätigkeiten, wie beispielsweise das Präparieren von Zähnen, das Entfernen von Füllungen, Kronen und Brücken oder das Beseitigen von Zahnbelag erfordern den Einsatz von Instrumenten, die mit hoher Drehzahl rotieren. Um Schäden im Pulpa-Dentin-Bereich zu vermeiden, wird bei der Behandlung Wasser zum Zwecke der lokalen Kühlung zugeführt. Dabei entstehen auch als Aerosole bezeichnete Sprühnebel. Der aus dem Patientenmund austretende Sprühnebel enthält Tröpfchen, die Kühlwasser, Speichel und Blut enthalten können. Von diesem Gemisch geht ein hohes Infektionsrisiko aus.

Dieser aus dem Mund des Patienten austretende Sprühnebel lässt sich, sofern keine Gegenmaßnahmen ergriffen werden, noch in einem Abstand von mehreren Metern nachweisen und setzt sich auf den Oberflächen im Behandlungsraum ab. Die sich außer dem Patienten noch im Behandlungsraum befindenden Personen, also insbesondere der behandelnde Arzt und dessen Hilfspersonal, atmen den Sprühnebel ein und können sich ggf. infizieren.

Die wirksamste Gegenmaßnahme gegen die Verbreitung des Sprühnebels besteht darin, ihn möglichst noch in der Mundhöhle des Patienten mit Hilfe einer Kanüle abzusaugen.

In der Praxis unterscheidet man zwischen einer hochvolumigen Absaugung (*High Volume Suction*), wie sie vorwiegend in Europa praktiziert wird, und einer mittelvolumigen Absaugung (*Medium Volume Suction*), die sich außerhalb Europas durchgesetzt hat. Bei der hochvolumigen Absaugung werden durch das Zusammenspiel aus Unterdruckerzeuger, Schläuchen und Kanülen Volumenströme zwischen 250 und 350 l/min. erreicht; die Absaugkanülen haben dabei typischerweise einen Innendurchmesser von ca. 12 mm. Bei der mittelvolumigen Absaugung liegt der Volumenstrom typischerweise zwischen etwa 100 und 250 l/min, wobei die verwendeten Kanülen einen Innendurchmesser von ca. 9 mm haben.

Bei der Zahnbehandlung müssen jedoch nicht nur der Sprühnebel abgesaugt werden, sondern auch Flüssigkeiten wie Blut oder Speichel mit ggf. darin enthaltenen Partikeln. Hierzu wird eine kleinere Kanüle über einen separaten Schlauch mit der Unterdruckquelle verbunden. Diese kleinere Kanüle, die meist als Speichelsauger oder Speichelzieher bezeichnet wird, hat einen deutlich kleineren Querschnitt mit einem Innendurchmesser zwischen etwa 3 und 5 mm und ist endseitig mit einer kleinen Schutzkappe versehen, in die mehrere Öffnungen mit einer lichten Weite von ca. 0,4 - 0,7 mm eingearbeitet sind. Die Schutzkappe verhindert, dass größere Partikel angesaugt werden, was zu einer Verstopfung des Speichelsaugers führen könnte.

Aufgrund seines geringen Querschnitts ist der Speichelsauger nicht geeignet, den Sprühnebel abzusaugen. Der Volumenstrom an Luft, wenn keine Flüssigkeit angesaugt wird, beträgt nur etwa 80 bis 120 l/min. Da der Volumenstrom durch Weichteile, an denen die Schutzkappe anliegt, in der Regel behindert wird, lässt sich allein mit dem Speichelsauger der Sprühnebel nicht wirksam absaugen.

Je nach Land werden die zahnärztliche Behandlung und damit auch die Absaugung unterschiedlich durchgeführt. Im deutschsprachigen Raum wird üblicherweise die Absaugung von Flüssigkeiten und Sprühnebel durch die Zahnarzthelferin unterstützt, so dass der Arzt sich ganz auf die eigentliche Behandlung konzentrieren kann. In den meisten anderen Ländern wie etwa in Frankreich arbeitet der Arzt hingegen allein. Ohne Unterstützung durch eine Zahnarzthelferin ist es jedoch schwierig, den Speichelsauger und zusätzlich die Kanüle für die Absaugung des Sprühnebels in der Mundhöhle des Patienten zu führen und gleichzeitig die eigentliche Behandlung durchzuführen. Dies hat zur Folge, dass oft nur eine Speichelabsaugung stattfindet, der Sprühnebel aber weitgehend ungehindert aus der Mundhöhle des Patienten austreten kann.

DE 201 03 524 U1 beschreibt ein Aspirationshandstück zur Verbindung mit einem zahnärztlichen Absauggerät, unter Verwendung von Speichelsauger, wobei ein Verzweigungsstück mit einer Anschlussöffnung für das Dentalabsauggerät und mit zwei Anschlussöffnungen für zwei austauschbare, aufsteckbare Speichelsauger vorhanden ist.

DE 86 12 671 U1 beschreibt ein Aspirationshandstück bestehend aus einem Sprühnebel- und Speichelabsauger.

Aus der WO 2011/120668 A1 ist eine Saugvorrichtung bekannt, bei der von einem Handstück zwei Speichelsauger abgehen. Einer der beiden Speichelsauger hat eine hakenförmige Krümmung, mit der er sich in den Mundwinkel des zu behandelnden Patienten einhängen lässt, so dass er nicht gehalten werden muss. Das Ende dieses Speichelsaugers legt sich parallel zur unteren Zahnreihe des Mundwinkels in den tiefsten ihm zugänglichen Abschnitt des Mundraums und saugt dort überschüssiges Wasser und Speichel ab. Der andere Speichelsauger, der sich verformen lässt, wird auf eine Stelle ausgerichtet, an der eine punktuelle Absaugung gewünscht wird, und hält gleichzeitig die Zunge weg.

### ZUSAMMENFASSUNG DER ERFINDUNG

Aufgabe der Erfindung ist es, ein Saughandstück für eine dentale Behandlungseinheit anzugeben, das ein ergonomisches Arbeiten und einen hohen Infektionsschutz ermöglicht. Diese Aufgabe wird erfindungsgemäß durch ein Saug-Handstück für eine dentale Behandlungseinheit gelöst, die einen Unterdruck-Anschluss hat, der dazu eingerichtet ist, mit einer Unterdruckquelle der Behandlungseinheit verbunden zu werden. Ferner verfügt das Saug-Handstück über einen Speichel-Anschluss, der dazu eingerichtet ist, mit einer Speichel-Saugkanüle verbunden zu werden, und über Sprühnebel-Anschluss, der dazu eingerichtet ist, mit einer Sprühnebel-Saugkanüle verbunden zu werden. Das Saug-Handstück hat einen verzweigten Strömungsweg, der den Unterdruck-Anschluss sowohl mit dem Speichel-Anschluss als auch mit dem Sprühnebel-Anschluss verbindet. Der Strömungsweg enthält einen Verzweigungsabschnitt, an dem sich ein am Unterdruck-Anschluss endender Unterdruck-Kanal auf einen am Speichel-Anschluss endenden Speichel-Kanal und einem am Sprühnebel-Anschluss endenden Sprühnebel-Kanal aufteilt. Der Sprühnebel-Kanal hat an seiner engsten Stelle eine erste Querschnittsfläche A1, die mindestens doppelt so groß ist wie eine zweite Querschnittsfläche A2 an der engsten Stelle des Speichel-Kanals.

An das erfindungsgemäße Saug-Handstück lassen sich somit gleichzeitig eine Speichel-Saugkanüle und eine Sprühnebel-Saugkanüle anschließen und parallel betreiben. Der behandelnde Arzt oder die Zahnarzthelferin müssen daher nicht mehr zwei getrennte Handstücke führen, sondern können die Speichelabsaugung und die Sprühnebel-Absaugung mit einer einzigen Hand bewerkstelligen. Wenn die Speichel-Saugkanüle U-förmig abgewinkelt ist, kann das Handstück auch im Mundwinkel des Patienten eingehängt werden, so dass auch ein allein behandelnder Arzt beide Hände für die eigentliche Behandlung frei hat. Wenn die Speichel-Saugkanüle verbiegbar und die größere Sprühnebel-Saugkanüle ebenfalls verbiegbar, verdrehbar oder in sonstiger Weise verstellbar ist, können die beiden Saugkanülen bequem am gewünschten Ort platziert werden. In Betracht kommt dabei auch eine Anordnung der beiden Saugkanülen, bei denen die Speichel-Saugkanüle sich in der Mundhöhle des Patienten und die Sprühnebel-Saugkanüle außerhalb der Mundhöhle des Patienten befindet. Eine solche Anordnung ist vor allem bei besonders beengten Behandlungsverhältnissen in der Mundhöhle vorteilhaft, weil es häufig schwierig ist, zusätzlich zu zwei Saugkanülen noch zahnärztliche Instrumente in der gewünschten Weise am Behandlungsort innerhalb der Mundhöhle des Patienten zu platzieren.

Die Erfindung beruht auf der überraschenden Erkenntnis, dass für eine wirksame Absaugung von Flüssigkeiten nur ein relativ geringer Volumenstrom benötigt wird. Dadurch ist es möglich, über lediglich einen einzigen an der Behandlungseinheit installierten Unterdruckschlauch sowohl Flüssigkeiten als auch Sprühnebel wirksam abzusaugen. Den sehr unterschiedlichen Anforderungen an die erforderlichen Volumenströme trägt das erfindungsgemäße Handstück durch die unterschiedlichen Querschnitte in den Speichel- und Sprühnebel-Kanälen Rechnung. Auf diese Weise können die für den Speichelsauger benötigten Volumenströme von etwa 80 bis 120 l/min und der deutlich größere Volumenstrom von 200 bis 350 l/min über nur eine Schlauchverbindung zur Druckquelle der Behandlungseinheit erreicht werden.

Vorzugsweise beträgt das Verhältnis m=A1/A2 zwischen den Querschnittsflächen im Sprühnebel-Kanal bzw. Speichel-Kanal zwischen 3 und 100 und weiter vorzugsweise zwischen 5 und 50. Es hat sich gezeigt, dass sich bei diesen Verhältnissen der Querschnittsflächen eine besonders günstige Aufteilung der zur Verfügung stehenden Saugleistung für die Funktionen Speichelabsaugung und Sprühnebelabsaugung erreichen lässt.

Bevorzugt ist es ferner, wenn die Querschnittsfläche A1 einen Wert zwischen 25 mm² und 120 mm² und die Querschnittsfläche A2 einen Wert zwischen 1,7 mm² und 7 mm² hat. Um die gängigen Sprühnebel- und Speichel-Saugkanülen unverändert mit dem erfindungsgemäßen Handstück verwenden zu können, bietet es sich an, die Querschnitte A1 und A2 im Sprühnebel-Kanal bzw. Speichel-Kanal an die Querschnitte der marktüblichen Kanülen anzupassen, wobei allerdings Abweichungen aus unten noch näher erläuterten Gründen zweckmäßig sein können. Dies führt zu bevorzugten Werten für die Querschnittsfläche A1 zwischen 35 mm² und 100 mm² und für die Querschnittsfläche A2 zwischen 2,5 mm² und 8 mm².

Um widerstandsarme Strömungswege zu erhalten, ist es günstig, wenn die Querschnittsflächen der Kanäle kreisrund sind. Grundsätzlich sind aber auch anders geformte Querschnittsflächen möglich. Die Speichel-Saugkanülen sind beispielsweise häufig mit einem Draht versehen, um diese plastisch verformbar zu machen. Die Form der Querschnittsflächen der Kanülen weicht dann häufig von der Kreisform ab.

Bei einem bevorzugten Ausführungsbeispiel verlaufen der Unterdruck-Kanal und der Sprühnebel-Kanal jeweils gerade und haben miteinander fluchtende Längsachsen. Die am Sprühnebel-Kanal angesaugte Luft mit dem darin enthaltenen Sprühnebel wird dadurch auf ihrem Weg durch das Handstück und über den Verzweigungsabschnitt hinweg nicht umgelenkt, sondern hat einen geradlinigen Strömungsverlauf. Dadurch wird der Strömungswiderstand reduziert und die Effizienz der Sprühnebel-Absaugung erhöht.

In diesem Fall kann der Speichel-Kanal einen zum Verzweigungsabschnitt weisenden Schrägabschnitt mit einer Längsachse haben, die einen Winkel zur Längsachse des Unterdruck-Kanals bildet, der zwischen 10° und 45° und vorzugsweise zwischen 20° und 30° liegt. Dieser relativ kleine Winkel, unter dem der Speichel-Kanal in den Unterdruck-Kanal einmündet, reduziert den Strömungswiderstand und trägt damit zu einer effizienten Absaugung von Speichel und anderen Flüssigkeiten bei.

Dabei kann es zweckmäßig sein, wenn der Speichel-Kanal einen weiteren Abschnitt mit einer Längsachse hat, die parallel zu der Längsachse des Sprühnebel-Kanals verläuft. Die Sprühnebel-Saugkanüle und die Speichel-Saugkanüle können dann parallel an den entsprechenden Anschlüssen des Saug-Handstücks angeschlossen werden, so dass sich das Handstück bequemer von der Zahnarzthelferin oder dem behandelnden Arzt führen lässt.

Bei einem bevorzugten Ausführungsbeispiel hat der Sprühnebel-Kanal einen direkt an den Verzweigungsabschnitt angrenzenden Verjüngungsabschnitt, in dem die Querschnittsfläche des Sprühnebel-Kanals verjüngt ist. Die Verjüngung beträgt relativ zu einem dem Verzweigungsabschnitt gegenüberliegenden Abschnitt des Sprühnebel-Kanals vorzugsweise 20% bis 35%. Infolge dieser Verjüngung entsteht im Bereich des Verzweigungsabschnitts ein Druckgefälle gegenüber der Position, an der die Sprühnebel-Saugkanüle in das Handstück eingesteckt oder in sonstiger Weise befestigt ist. Dieser Differenzdruck wirkt sich positiv auf die Absaugwirkung am Speichel-Kanal aus.

Vorteilhaft ist es ferner, wenn sich die Querschnittsfläche des Speichel-Kanals zum Speichel-Anschluss hin kontinuierlich oder sprunghaft verjüngt. Diese Verjüngung bewirkt, dass sich größere Partikel, welche die Öffnungen der üblicherweise endseitig an den Speichel-Saugkanülen angeordneten Schutzkappen durchdringen, in dem verjüngten Abschnitt sammeln und nicht zur einer Verstopfung des nachfolgenden Strömungswegs führen. Beim Reinigen des Saug-Handstücks können die Partikel leicht mit Hilfe eines schmalen Instruments aus dem verjüngten Abschnitt herausgeschoben und entfernt werden.

Gegenstand der Erfindung ist außerdem eine Saugvorrichtung mit einem vorstehend beschriebenen Saug-Handstück, einer mit dem Speichel-Anschluss verbundenen Speichel-Saugkanüle und einer mit dem Sprühnebel-Anschluss verbundenen Sprühnebel-Saugkanüle.

Vorzugsweise sind die Speichel-Saugkanüle und die Sprühnebel-Saugkanüle lösbar mit dem Handstück verbunden. Dies ist vor allem dann vorteilhaft, wenn es sich bei den Kanülen um Einmalprodukte handelt. Es kommt aber auch in Betracht, dass mindestens eine der Kanülen einstückig mit dem Handstück ausgebildet und dadurch nicht zerstörungfrei vom Handstück lösbar ist. Nach einer Behandlung kann dann die gesamte Saugvorrichtung gereinigt und desinfiziert werden, ohne dass sie vorher zerlegt werden muss.

Bei einem Ausführungsbeispiel ist die Speichel-Saugkanüle plastisch verbiegbar. Die Sprühnebel-Saugkanüle verfügt über mindestens ein Dreh- oder Kugelgelenk. Auf diese Weise lassen sich die Ansaugenden der Saugkanülen an den gewünschten Orten platzieren.

Die Speichel-Saugkanüle und die Sprühnebel-Saugkanüle können dabei so geformt sein, dass während der Behandlung ein Ansaugende der Speichel-Saugkanüle in einer Mundhöhle des Patienten und ein Ansaugende der Sprühnebel-Saugkanüle außerhalb der Mundhöhle des Patienten platzierbar sind. Wie oben bereits erläutert wurde, kann dies vor vorteilhaft sein, wenn aus Platzgründen nicht beide Ansaugenden in der Mundhöhle des Patienten platziert werden können.

Die Sprühnebel-Saugkanüle kann einen austauschbar befestigten Ansaugkopf haben. Dadurch lassen sich unterschiedlich geformte Ansaugköpfe am Kanülengrundkörper befestigen, die an die speziellen Erfordernisse der Behandlung angepasst sind. Bei der Verwendung von Pulverstrahlgeräten zur Zahnreinigung können beispielsweise Ansaugköpfe mit großen Auffangtrichtern verwendet werden.

Die Speichel-Saugkanüle kann endseitig eine an sich bekannte Schutzkappe aufweisen, die mehrere Öffnungen zum Ansaugen von Flüssigkeiten aufweist. Die Sprühnebel-Saugkanüle ist hingegen vorzugsweise endseitig offen, um keinen zusätzlichen Strömungswiderstand zu erzeugen.

Bei einem Ausführungsbeispiel geht die Sprühnebel-Saugkanüle endseitig in einen Auffangtrichter über, der aufgrund seiner Abmessungen nicht in der Mundhöhle eines Patienten platzierbar ist. Der Auffangtrichter kann eine Querschnittsfläche haben, die größer ist als 15 cm².

Gemäß einem anderen Aspekt der Erfindung weist eine Saugvorrichtung für eine dentale Behandlungseinheit eine Speichel-Saugkanüle, eine Sprühnebel-Saugkanüle und ein Saug-Handstück mit einem Unterdruck-Anschluss auf, der dazu eingerichtet ist, mit einer Unterdruckquelle der Behandlungseinheit verbunden zu werden. Das Saug-Handstück hat ferner einen Speichel-Anschluss, der mit der Speichel-Saugkanüle verbunden ist und einen Sprühnebel-Anschluss auf, der mit der Sprühnebel-Saugkanüle verbunden ist. Das Saug-Handstück hat einen verzweigten Strömungsweg, der den Unterdruck-Anschluss sowohl mit dem Speichel-Anschluss als auch mit dem Sprühnebel-Anschluss verbindet. Der Strömungsweg enthält einen Verzweigungsabschnitt, an dem sich ein am Unterdruck-Anschluss endender Unterdruck-Kanal auf einen am Speichelanschluss endenden Speichel-Kanal und einen am Sprühnebel-Anschluss endenden Sprühnebel-Kanal aufteilt. Die Speichel-Saugkanüle weist endseitig eine Schutzkappe auf, die mehrere Öffnungen zum Einsaugen von Flüssigkeiten aufweist, wohingegen die Sprühnebel-Saugkanüle endseitig offen ist.

Die Sprühnebel-Saugkanüle kann dabei endseitig in einen Auffangtrichter übergehen, der aufgrund seiner Abmessungen nicht in der Mundhöhle eines Patienten platzierbar ist. Vorzugsweise hat der Auffangtrichter eine Querschnittsfläche, die größer als 15 cm² ist.

Soweit vorliegend von Verbindungen zwischen Strömungswegen, Anschlüssen und/oder Kanälen die Rede ist, ist damit stets eine fluidische Verbindung gemeint.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine perspektivische Darstellung einer erfindungsgemäßen Saugvorrichtung mit einem Saug-Handstück und zwei daran befestigten Saug-Kanülen;
- Figur 2: eine vergrößerte perspektivische Darstellung des in der Figur 1 gezeigten Saug-Handstücks;
- Figur 3: einen Längsschnitt durch das in der Figur 2 gezeigte Saug-Handstück.

### BESCHREIBUNG BEVORZUGTER AUSFÜHRUNGSBEISPIELE

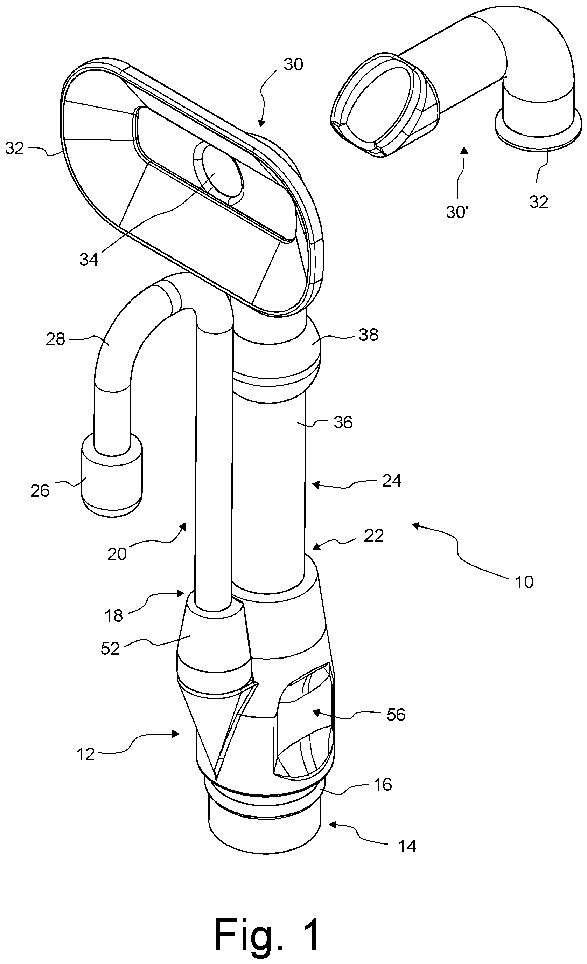

Die Figur 1 zeigt in einer perspektivischen Darstellung ein Ausführungsbeispiel einer insgesamt mit 10 bezeichneten erfindungsgemäßen Saugvorrichtung.

Die Saugvorrichtung 10 umfasst ein Saug-Handstück 12, das an seiner Unterseite einen Unterdruck-Anschluss 14 hat. Dieser ist über einen Druckschlauch mit einer Unterdruckquelle (beides nicht dargestellt) einer dentalen Behandlungseinheit ("Zahnarztstuhl") verbindbar. Die Unterdruckquelle kann dabei räumlich entfernt von der Behandlungseinheit angeordnet sein und gleichzeitig mehrere Behandlungseinheiten mit Unterdruck versorgen, wie dies an sich bekannt ist. Um eine dichte Verbindung zum Druckschlauch zu gewährleisten, verfügt der Unterdruck-Anschluss 14 über einen Dichtungsring 16.

An der in der Figur 1 nach oben weisenden Seite weist das Saug-Handstück 12 zwei weitere Anschlüsse auf, nämlich einen Speichel-Anschluss 18, an dem eine Speichel-Saugkanüle 20 lösbar befestigt ist, und einen Sprühnebel-Anschluss 22, an dem eine Sprühnebel-Kanüle 24 lösbar befestigt ist.

Die Speichel-Saugkanüle 20 weist einen an sich bekannten Aufbau auf und ist in der Figur 1 mit einer U-förmigen Krümmung dargestellt, so dass die Speichel-Saugkanüle 20 bei Bedarf am Mundwinkel oder an der Unterlippe des Patienten "eingehängt" werden kann. Die Speichel-Saugkanüle 20 hat einen Schlauchabschnitt 28, in den ein Draht eingearbeitet ist. Dadurch kann der Schlauchabschnitt 28 auch in eine andere Form als in der Figur 1 gezeigt überführt werden. Endseitig trägt der Schlauchabschnitt 28 eine Schutzkappe 26, in die mehrere Öffnungen (nicht dargestellt) eingearbeitet sind, durch die hindurch Speichel, Wasser, Blut oder andere Flüssigkeiten angesaugt werden können.

Die Sprühnebel-Kanüle 24 hat einen deutlich größeren Innendurchmesser und verfügt über einen austauschbar befestigten Ansaugkopf 30. Im dargestellten Ausführungsbeispiel umfasst der Ansaugkopf 30 einen Auffangtrichter 32, der eine Ansaugöffnung 34 der Sprühnebel-Kanüle 24 umgibt, durch die ungehindert Sprühnebel eintreten kann. Die Abmessungen des Auffangtrichters 30 sind hier so gewählt, dass der Auffangtrichter 32 zusammen mit einem Ansaugende der Speichel-Saugkanüle 20 in die Mundhöhle eines Patienten eingeführt werden kann. Falls dafür bei einer Behandlung der Platz in der Mundhöhle des Patienten nicht ausreicht, kann der Ansaugkopf 30 auch vollständig außerhalb der Mundhöhle des Patienten platziert werden. Aufgrund des größeren Abstandes vom Behandlungsort kann es dann zweckmäßig sein, einen Auffangtrichter 32 mit einer größeren Trichterfläche, z.B. zwischen etwa 15 cm² und 100 cm², zu verwenden, um möglichst viel Sprühnebel auffangen und absaugen zu können.

Der Ansaugkopf 30 ist über eine Austauschkupplung, die in der Figur 1 durch den Auffangtrichter 32 überdeckt ist, an einem rohrartigen Kanülengrundkörper 36 befestigt. Die Austauschkupplung kann beispielsweise eine Steck- oder Schraubverbindung umfassen. Auf diese Weise kann der Ansaugkopf 30 auf einfache Weise gegen einen anders geformten und an die gegebene Behandlungssituation optimal angepassten Ansaugkopf ausgetauscht werden, wie er in der Figur 1 rechts daneben dargestellt und mit 30' bezeichnet ist.

Der Kanülengrundkörper 30 umfasst zwei Teilstücke, die über ein Kugelgelenk 38 miteinander verbunden sind. Auf diese Weise kann der am oberen Teilstück befestigte Ansaugkopf 30 in unterschiedliche Richtungen orientiert werden.

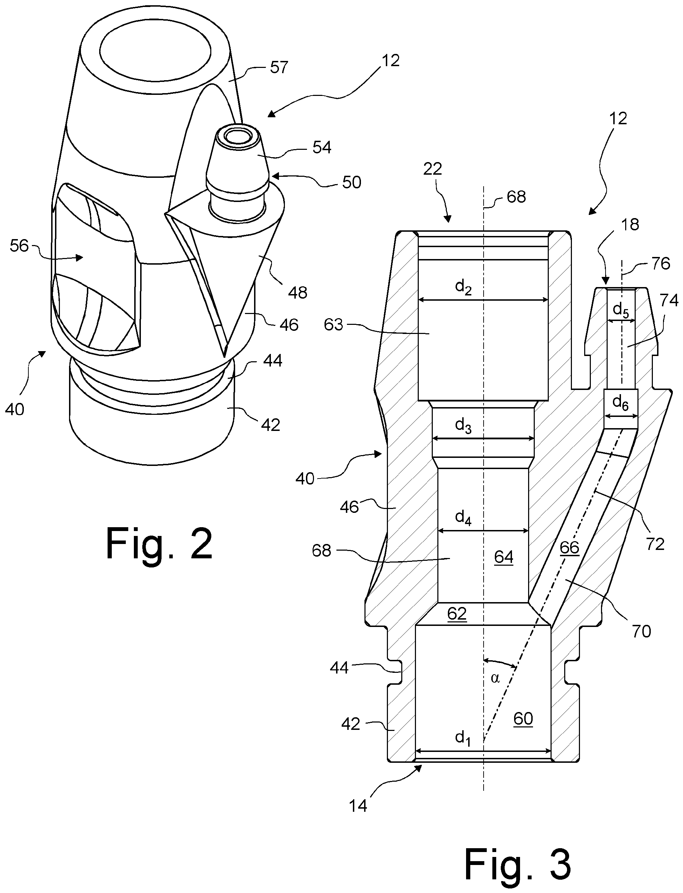

Die Figur 2 zeigt das Saug-Handstück 12 in einer vergrößerten Darstellung ohne die daran angeschlossenen Kanülen 20, 24. Das Saug-Handstück 12 hat einen annähernd zylindrischen Grundkörper 40 mit einem zylindrischen Basisabschnitt 42, der den Unterdruck-Anschluss 14 bildet und mit einer umlaufenden Nut 44 versehen ist, in die der in der Figur 1 gezeigte Dichtungsring 16 eingelegt ist. Die Verbindung mit dem Druckschlauch wird herstellt, indem das freie Schlauchende über den Basisabschnitt 42 und den darin aufgenommenen Dichtungsring 16 aufgeschoben wird.

An den Basisabschnitt 42 schließt sich ein Mittelabschnitt 46 an, der einen größeren Durchmesser als der Basisabschnitt 42 hat. An einer Seite des Mittelabschnitts 46 ist ein Ansatz 48 angeformt, der einen pilzförmigen Steckaufsatz 50 trägt, der den Speichel-Anschluss 18 bildet. Während der Grundkörper 40 und der Ansatz 48 einstückig als Spritzguss-Kunststoffformteil realisiert sein können, besteht der Steckaufsatz 50 vorzugsweise aus einem Elastomer. Auf den Steckaufsatz 50 wird vor Inbetriebnahme ein in der Figur 1 gezeigtes Anschlussstück 52 der Speichel-Saugkanüle 20 aufgeschoben, dessen Durchgangsöffnung eine Form hat, die zur Oberfläche des Steckaufsatzes 50 komplementär ist. Dadurch rastet das Anschlussstück 52 beim Aufschieben auf den Steckaufsatz 50 ein und stellt infolge der gewählten Materialpaarung gleichzeitig eine dichte Verbindung zwischen dem Saug-Handstück 12 und der Speichel-Saugkanüle 20 her.

Auf der Höhe des Ansatzes 48 sind über die verbleibende Außenfläche des Mittelabschnitts 46 drei Griffmulden 56 verteilt, um eine sichere Führung des Handstücks 12 durch einen Bediener zu ermöglichen. An den Mittelabschnitt 46 schließt sich nach oben ein Endabschnitt 57 an, dessen Außenfläche sich konisch leicht verjüngt und der den Sprühnebel-Anschluss 22 bildet.

Im Folgenden wird auf die Figur 3 Bezug genommen, die das Saug-Handstück 12 in einem axialen Schnitt zeigt, so dass die Strömungswege im Saug-Handstück 12 erkennbar sind. Der an den Unterdruck-Anschluss 14 angrenzende Abschnitt des Strömungswegs wird im Folgenden als Unterdruck-Kanal 60 bezeichnet. Der Unterdruck-Kanal 60 hat, wie alle anderen noch zu erörternden Kanäle auch, bei diesem Ausführungsbeispiel einen kreisrunden Querschnitt. Der Durchmesser d₁ des Unterdruck-Kanals 60, der sich über die Länge des Unterdruckkanals 60 nicht verändert, ist an den Innendurchmesser des Druckschlauchs angepasst und beträgt im dargestellten Ausführungsbeispiel etwa 12 mm.

In einem Verzweigungsabschnitt 62 teilt sich der Unterdruck-Kanal 60 auf einen zum Sprüh-Nebelanschluss 18 führenden Sprühnebel-Kanal 64 und einen zum Speichel-Anschluss 18 führenden Speichel-Kanal 66 auf. Die Längsachse 68 des Sprühnebel-Kanals 64 fluchtet mit der Längsachse des Unterdruck-Kanals 60, so dass man für die Absaugung des Sprühnebels, die einen hohen Volumenstrom erfordert, einen geradlinigen und dadurch widerstandsarmen Strömungsverlauf erhält.

Der Sprühnebel-Kanal 64 ist in drei Abschnitte mit unterschiedlichen Durchmessern unterteilt. Ein an den Sprühnebel-Anschluss 22 angrenzender oberer Abschnitt 63 hat einen Durchmesser d₂, der so bemessen ist, dass darin der Kanülengrundkörper 36 der Sprühnebel-Saugkanüle 24 eingeschoben werden kann. Im dargestellten Ausführungsbeispiel ist d₂ = 12 mm.

Der daran angrenzende Abschnitt des Sprühnebel-Kanals 64 hat einen Durchmesser d₃, der dem Innendurchmesser des Kanals im Kanülengrundkörper 36 entspricht. Im dargestellten Ausführungsbeispiel ist d₃ = 9 mm.

Zwischen diesem Abschnitt und dem Verzweigungsabschnitt 62 befindet sich ein Verjüngungsabschnitt 68, dessen Durchmesser d₄ gegenüber dem Durchmesser d₃ verringert ist. Im dargestellten Ausführungsbeispiel ist d₄ = 8 mm. Im Bereich des Verzweigungsabschnitts 42 erweitert sich der Durchmesser d₄ kontinuierlich bis zum Durchmesser d₁ des Unterdruck-Kanals 60. Ähnlich wie bei einer Venturi-Düse kommt es aufgrund der erhöhten Strömungsgeschwindigkeit im Verjüngungsabschnitt 68 am Übergang zwischen dem Verjüngungsabschnitt 68 und dem Verzweigungsabschnitt 62 zu einem Druckabfall, der die Absaugwirkung im Speichel-Kanal 66 verbessert.

Der Speichel-Kanal 66 ist im dargestellten Ausführungsbeispiel in zwei Abschnitte unterteilt. In einem an den Verzweigungsabschnitt 62 angrenzenden Schrägabschnitt 70 ist die Längsachse 72 in einem Winkel α zur gemeinsamen Längsachse des Unterdruckkanals 60 und des Sprühnebel-Kanals 64 angeordnet, wobei α im dargestellten Ausführungsbeispiel etwa 25° beträgt.

Der Speichel-Kanal 66 knickt am gegenüberliegenden Ende ab und geht in einen weiteren Abschnitt 74 über, dessen Längsachse 76 parallel zur Längsachse 68 des Sprühnebel-Kanals 64 verläuft. In dem weiteren Abschnitt 74 ist der Durchmesser d₅ des Speichel-Kanals 66 gegenüber dem Durchmesser d₆ im übrigen Speichel-Kanal 66 verringert. Im dargestellten Ausführungsbeispiel ist d₅ = 2,5 mm und d₆ = 3 mm. Auf diese Weise bleiben Partikel, welche die Schutzkappe 26 durchdringen konnten, bevorzugt in dem zweiten Abschnitt 74 hängen und gelangen nicht in den Druckschlauch oder die Druckquelle. Beim Reinigen des Saug-Handstücks 12 können die Partikel mit einem länglichen Gegenstand nach unten durchgestoßen werden, um den Strömungsweg wieder freizugeben.

Bei der Verwendung des Saug-Handstücks 12 wird dieses mit dem Unterdruck-Anschluss 14 an den Druckschlauch angeschlossen, um eine Verbindung mit der Druckquelle der Behandlungseinheit herzustellen. Außerdem werden die Sprühnebel-Saugkanüle 24 und die Speichel-Saugkanüle 20 auf die entsprechenden Anschlüsse 22 bzw. 18 aufgesteckt. Je nach Ausgestaltung des Absaugkopfes 30 kann dieser entweder so platziert werden, dass es sich zusammen mit dem Ansaugende der Speichel-Saugkanüle 20 in der Mundhöhle des Patienten oder außerhalb davon befindet.

An der engsten Stelle des Strömungsweges, nämlich im Verjüngungsabschnitt 68, beträgt die Querschnittsfläche A1 des Sprühnebel-Kanals 64 etwa 25 mm². Die Querschnittsfläche A2 des Speichel-Kanals 66 beträgt an der engsten Stelle (weiterer Abschnitt 74 mit Durchmesser ds) etwa 7,8 mm². Die Querschnittsfläche A1 des Sprühnebel-Kanals 64 ist damit etwa 3 Mal so groß wie die Querschnittsfläche des Speichel-Kanals 66. Dadurch ist auch der Volumenstrom im Sprühnebel-Kanal 64 in grober Näherung dreimal so groß wie im Speichelkanal 66. Dies trägt der Tatsache Rechnung, dass für eine effiziente Speichelabsaugung nur ein relativ kleiner Volumenstrom von weniger als 100 l/min benötigt wird. Für eine wirkungsvolle Absaugung des Sprühnebels wird hingegen eine Volumenstrom benötigt, der in der Größenordnung von 300 l/min liegen sollte.

Da der tatsächlich erreichbare Volumenstrom nicht nur von dem an dem Unterdruck-Anschluss 14 anliegenden Unterdruck, sondern auch von den Strömungswegen im Handstück 12 und in den Kanülen 20, 24 abhängt, können auch deutlich größere Verhältnisse A1/A2 von bis zu 100 nötig sein, um einen ausreichenden Volumenstrom sowohl für die Speichel- als auch für die Sprühnebelabsaugung sicherzustellen. Umgekehrt kann bei besonders leistungsfähigen Unterdruckpumpen auch ein kleineres Verhältnis A1/A2 genügen, das aber den Wert 2 nicht unterschreiten sollte.

Bei einer nicht dargestellten Variante weist das Saug-Handstück 12 einen Schiebeschalter auf, mit dem sich die fluidische Verbindung zum Unterdruck-Anschluss 14 ganz oder teilweise unterbrechen lässt. Auf diese Weise kann eine Zahnarzthelferin oder der behandelnde Arzt die Absaugung mit sofortiger Wirkung unterbrechen oder verringern, ohne dass Bedienelemente an der Behandlungseinheit betätigt werden müssen.

Anstelle der konstruktiv relativ aufwendigen und deswegen für einen Mehrfachgebrauch vorgesehenen Sprühnebel-Saugkanüle 24 können auch einfacher aufgebaute Kanülen verwendet werden, die nur für eine einmalige Benutzung vorgesehen sind und daher nicht gereinigt werden müssen. Derartige an sich bekannte Kanülen sind ähnlich aufgebaut wie abknickbare Strohhalme, so dass deren Ansaugenden ebenfalls an unterschiedlichen Orten innerhalb oder außerhalb der Mundhöhle des Patienten platziert werden können.

## Patentansprüche

1. Saug-Handstück (12) für eine dentale Behandlungseinheit, mit
einem Unterdruck-Anschluss (14), der dazu eingerichtet ist, mit einer Unterdruckquelle der Behandlungseinheit verbunden zu werden,
einem Speichel-Anschluss (18), der dazu eingerichtet ist, mit eine Speichel-Saugkanüle (20) verbunden zu werden,
einem Sprühnebel-Anschluss (22), der dazu eingerichtet ist, mit einer Sprühnebel-Saugkanüle (24) verbunden zu werden,
einem verzweigten Strömungsweg, der den Unterdruck-Anschluss (14) sowohl mit dem Speichel-Anschluss (18) als auch mit dem Sprühnebel-Anschluss (22) verbindet, wobei
der Strömungsweg einen Verzweigungsabschnitt (62) enthält, an dem sich ein am Unterdruck-Anschluss (14) endender Unterdruck-Kanal (60) auf einen am Speichel-Anschluss (18) endenden Speichel-Kanal (66) und einen am Sprühnebel-Anschluss (22) endenden Sprühnebel-Kanal (64) aufteilt, und wobei
der Sprühnebel-Kanal (64) an seiner engsten Stelle (d₄) eine erste Querschnittsfläche A1 hat, die mindestens doppelt so groß ist wie eine zweite Querschnittsfläche A2 an der engsten Stelle (d₅) des Speichel-Kanals (66).

2. Saug-Handstück nach Anspruch 1, bei dem das Verhältnis m einen Wert zwischen 5 und 50 hat.

3. Saug-Handstück nach Anspruch 2, bei dem die Querschnittsfläche A1 einen Wert zwischen 35 mm² und 100 mm² und die Querschnittsfläche A2 einen Wert zwischen 2,5 mm² und 8 mm² hat.

4. Saug-Handstück nach einem der vorhergehenden Ansprüche, bei dem der Unterdruck-Kanal (60) und der Sprühnebel-Kanal (64) jeweils gerade verlaufen und miteinander fluchtende Längsachsen (68) haben.

5. Saug-Handstück nach Anspruch 4, bei dem der Speichel-Kanal (66) einen zum Verzweigungsabschnitt (62) weisenden Schrägabschnitt (70) mit einer Längsachse (72) hat, die einen Winkel zur Längsachse (68) des Unterdruck-Kanals (60) bildet, der zwischen 10° und 45° liegt.

6. Saug-Handstück nach einem der vorhergehenden Ansprüche, bei dem der Sprühnebel-Kanal (64) einen direkt an den Verzweigungsabschnitt (62) angrenzenden Verjüngungs-Abschnitt (68) hat, in dem die Querschnittsfläche des Sprühnebel-Kanals (64) gegenüber den angrenzenden Abschnitten (62, 63) verjüngt ist.

7. Saug-Handstück nach einem der vorhergehenden Ansprüche, bei dem sich die Querschnittsfläche des Speichel-Kanals (66) zum Speichel-Anschluss (18) hin kontinuierlich oder sprunghaft verjüngt.

8. Saugvorrichtung (10) mit einem Saug-Handstück (12) gemäß einem der vorhergehenden Ansprüche, einer mit dem Speichel-Anschluss (18) verbundenen Speichel-Saugkanüle (20) und einer mit dem Sprühnebel-Anschluss (22) verbundenen Sprühnebel-Saugkanüle (24).

9. Saugvorrichtung nach Anspruch 8, wobei die Speichel-Saugkanüle (20) plastisch verbiegbar ist und die Sprühnebel-Saugkanüle (24) über mindestens ein Dreh- oder Kugelgelenk (38) verfügt.

10. Saugvorrichtung nach Anspruch 8 oder 9, bei der die Speichel-Saugkanüle (18) und die Sprühnebel-Saugkanüle (24) so geformt sind, dass während der Behandlung ein Ansaugende der Speichel-Saugkanüle (18) in einer Mundhöhle eines Patienten und ein Ansaugende der Sprühnebel-Saugkanüle (24) außerhalb der Mundhöhle des Patienten platzierbar sind.

11. Saugvorrichtung nach Anspruch 10, bei der die Sprühnebel-Saugkanüle (24) endseitig offen ist und in einen Auffangtrichter (32) übergeht, der aufgrund seiner Abmessungen nicht in der Mundhöhle eines Patienten platzierbar ist.

## Claims

1. Suction handpiece (12) for a dental treatment unit comprising
a negative pressure connection (14) which is adapted to be connected with a negative pressure source of the treatment unit,
a saliva connection (18) which is adapted to be connected with a saliva suction cannula (20),
an atomized spray connection (22) which is adapted to be connected with an atomized spray suction cannula (24),
a branched flow path which connects the negative pressure connection (14) not only with the saliva connection (18) but also with the atomized spray connection (22), wherein
the flow path includes branching section (62) on which a negative pressure channel (60) ending on the negative pressure connection (14) divides into a saliva channel (66) ending on the saliva connection (18) , and an atomized spray channel (64) ending on the atomized spray connection (22), and wherein
the atomized spray channel (64) at its narrowest point (d₄) has a first cross sectional area A1 which is at least twice as large as a second cross sectional area A2 at the narrowest point (d₅) of the saliva channel (66).

2. Suction handpiece according to claim 1 wherein the ratio m has a value between 5 and 50.

3. Suction handpiece according to claim 2 wherein the cross sectional area A1 has a value between 35 mm² and 100 mm², and the cross sectional area A2 has a value between 2.5 mm² and 8 mm².

4. Suction handpiece according to any one of the preceding claims wherein the negative pressure channel (60) and the atomized spray channel (64) each are extending in a straight line and have longitudinal axes (68) aligned with one another.

5. Suction handpiece according to claim 4 wherein the saliva channel (66) has an inclined portion (70) with a longitudinal axis (72), which is pointing to the branching section (62), wherein the longitudinal axis (72) has an angle to the longitudinal axis (68) of the negative pressure channel (60) which is between 10° and 45°.

6. Suction handpiece according to any one of the preceding claims wherein the atomized spray channel (64) has a tapering section (68) directly adjacent to the branching section (62) in which tapering section (68) the cross sectional area of the atomized spray channel (64) is tapered relative to the adjacent sections (62, 63).

7. Suction handpiece according to any one of the preceding claims wherein the cross sectional area of the saliva channel (66) is continuously or erratically tapered towards the saliva connection (18).

8. Suction device (10) with a suction handpiece (12) according to any one of the preceding claims, a saliva suction cannula (20) connected with the saliva connection (18) and an atomized spray suction cannula (24) connected with the atomized spray connection (22).

9. Suction device according to claims 8 wherein the saliva suction cannula (20) is plastically bendable and the atomized spray suction cannula (24) is provided with at least one pivotal joint or ball-and-socket joint (38).

10. Suction device according to any one of the claims 8 or 9 wherein the saliva suction cannula (18) and the atomized spray suction cannula (24) are formed in such a manner that during treatment a suction end of the saliva suction cannula (18) can be placed in the oral cavity of a patient and one suction end of the atomized spray suction cannula (24) can be placed outside the oral cavity of the patient.

11. Suction device according to claim 10 wherein the atomized spray suction cannula (24) is open at the end and passes into a collecting hopper (32) which, due to its dimensions, cannot be placed in the oral cavity of a patient.

## Revendications

1. Dispositif d'aspiration à manche (12) pour une unité de traitement dentaire, comportant
un raccord à dépression (14), qui est conçu pour être relié à une source de dépression de l'unité de traitement,
un raccord de salive (18), qui est conçu pour être relié à une canule d'aspiration de salive (20),
un raccord de brouillard de pulvérisation (22), qui est conçu pour être relié à une canule d'aspiration de brouillard de pulvérisation (24),
un chemin d'écoulement ramifié, qui relie le raccord à dépression (14) non seulement au raccord de salive (18) mais aussi au raccord de brouillard de pulvérisation (22), dans lequel
le chemin d'écoulement comprend une section de ramification (62), dans laquelle un canal de dépression (60) se terminant au niveau du raccord à dépression (14) se divise en un canal de salive (66) se terminant au niveau du raccord de salive (18) et un canal de brouillard de pulvérisation (64) se terminant au niveau du raccord de brouillard de pulvérisation (22),
et dans lequel
le canal de brouillard de pulvérisation (64) a, à son endroit le plus étroit (_{d4}), une première section transversale A1, qui est au moins deux fois plus grande qu'une deuxième section transversale A2 à l'endroit le plus étroit (d₅) du canal de salive (66).

2. Dispositif d'aspiration à manche selon la revendication 1, dans lequel le rapport m a une valeur comprise entre 5 et 50.

3. Dispositif d'aspiration à manche selon la revendication 2, dans lequel la section transversale A1 a une valeur comprise entre 35 mm² et 100 mm² et la section transversale A2 a une valeur comprise entre 2,5 mm² et 8 mm².

4. Dispositif d'aspiration à manche selon l'une quelconque des revendications précédentes, dans lequel le canal de dépression (60) et le canal de brouillard de pulvérisation (64) chacun s'étendent en ligne droite et ont des axes longitudinaux (68) alignés entre eux.

5. Dispositif d'aspiration à manche selon la revendication 4, dans lequel le canal de salive (66) a une partie oblique (70) orientée vers la section de ramification (62) avec un axe longitudinal (72) formant un angle avec l'axe longitudinal (68) du canal de dépression (60) qui est compris entre 10 et 45 degrés.

6. Dispositif d'aspiration à manche selon l'une quelconque des revendications précédentes, dans lequel le canal de brouillard de pulvérisation (64) comporte une partie de rétrécissement (68) directement adjacente à la section de ramification (62), dans laquelle la section transversale du canal de brouillard de pulvérisation (64) est rétrécie par rapport aux sections adjacents (62, 63).

7. Dispositif d'aspiration à manche selon l'une quelconque des revendications précédentes, dans lequel la section transversale du canal de salive (66) se rétrécit de manière continue ou par bonds vers le raccord de salive (18).

8. Dispositif d'aspiration (10) avec un dispositif d'aspiration à manche (12) selon l'une quelconque des revendications précédentes, une canule d'aspiration de salive (20) reliée au raccord de salive (18) et une canule d'aspiration de brouillard de pulvérisation (24) reliée au raccord de brouillard de pulvérisation (22).

9. Dispositif d'aspiration selon la revendication 8, dans lequel la canule d'aspiration de salive (20) est plastiquement déformable et la canule d'aspiration de brouillard de pulvérisation (24) dispose d'au moins une articulation rotative ou sphérique (38).

10. Dispositif d'aspiration selon la revendication 8 ou 9, dans lequel la canule d'aspiration de salive (18) et la canule d'aspiration de brouillard de pulvérisation (24) sont formées de sorte que, pendant le traitement, une extrémité d'aspiration de la canule d'aspiration de salive (18) peut être placée dans la cavité buccale du sujet et une extrémité d'aspiration de la canule d'aspiration de brouillard de pulvérisation (24) peut être placée à l'extérieur de la cavité buccale du sujet.

11. Dispositif d'aspiration selon la revendication 10, dans lequel la canule d'aspiration de brouillard de pulvérisation (24) est ouverte à l'extrémité et se transforme en un cône collecteur (32) qui, en raison de ses dimensions, ne peut pas être placé dans la cavité buccale du sujet.
